Europäisches Patentamt

European Patent Office

Office européen des brevets

(11) Publication number: **0 381 772**
**A1**

## (12) EUROPEAN PATENT APPLICATION
### published in accordance with Art. 158(3) EPC

(21) Application number: **89908512.0**

(22) Date of filing: **20.07.89**

(86) International application number:
**PCT/JP89/00725**

(87) International publication number:
**WO 90/01779 (22.02.90 90/05)**

(51) Int. Cl.5: **H01F 1/02, H02K 21/06**

(30) Priority: **11.08.88 JP 200844/88**

(43) Date of publication of application:
**16.08.90 Bulletin 90/33**

(84) Designated Contracting States:
**AT BE CH DE FR GB IT LI LU NL SE**

(71) Applicant: **YUUGEN KAISHA KANEX**
**1710-36, Higashigata Fukaya-shi**
**Saitama 366(JP)**

(72) Inventor: **MATSUYAMA, Yoshihiko**
**1710-36, Higashigata Fukaya-shi**
**Saitama 366(JP)**

(74) Representative: **Casalonga, Axel et al**
**BUREAU D.A. CASALONGA - JOSSE**
**Morassistrasse 8**
**D-8000 München 5(DE)**

(54) **PLASTIC-BONDED MAGNET.**

(57) A plastic-bonded magnet having high-energy magnetic properties which ordinary ferrite plastic magnets do not possess can be obtained according to the present invention by mixing oxide type strontium ferrite magnet pellets with easily oxidizable rare earth element type Nd-Fe-B magnet pellets or the like. The magnetic energy can be controlled by selecting the compounding ratio of said oxide type magnet pellets to said rare earth element type magnet pellets. The magnet can be obtained by separately subjecting the oxide type magnet powder and the rare earth element type magnet powder to coupling treatment such as silane coupling treatment to surround them with matrix plastics, then mixing them and molding the resulting mixture. This plastic magnet can be produced relatively inexpensively in spite of its high energy. In addition, mixing of the oxide type magnet powder with the rare earth element type magnet powder enables the absolute value of the negative magnetic temperature coefficient of the ferrite magnet to be reduced to 0 due to mutual compensation of respective magnetic temperature coefficients and, as the compounding ratio of the rare earth element type magnet is increased, the coefficient becomes positive. Thus the magnetic temperature coefficient can be controlled by changing the compounding ratio of the oxide type plastic magnet pellets to the rare earth element type plastic magnet pellets. Furthermore, the above-described surface treatment of magnetic powders serves to increase binding force to the matrix plastic to obtain the effect of preventing rare earth magnetic powder from rusting and improve the mechanical strength of the magnet itself.

S P E C I F I C A T I O N

PLASTIC-BONDED MAGNET

## Field of Technology

This invention relates to a proposition of a plastic magnet which is inexpensive and has excellent magnetic properties exceeding the $BH_{max}$ of 1.9 MGOe (megagauss·oersted) of conventional ferrite-based plastic magnets as well as characteristics not obtained in conventional permanent magnets such as excellent mechanical strengths, possibility of control of the temperature coefficient of the magnetic properties and the like.

## Background Technology

Plastic magnets have hitherto attracted attention in the relevant industry since they can be obtained in a high dimensional accuracy and those having an irregular configuration can be obtained without post-working when they are fabricated by injection molding and the like. It is reported in the prior art, however, that the oxide-based (ferrite-based) plastic magnets in the laboratory may have a maximum energy product of 2.2 MGOe but it is limited to 1.9 MGOe in the actual production. A maximum energy product exceeding this value can be obtained only by utilizing a rare-earth plastic magnet (Sm-Co and Nd-Fe types). The costs for the rare-earth plastic magnet, however, is as large as 20 times to 30 times as compared with the oxide-based ones so that cost reduction in high-magnetic energy plastic magnets is considered difficult.

Accordingly, in the prior art, the only means when a plastic magnet of high magnetic energy must be employed by all means is to shape and fabricate from expensive rare-earth plastic magnet pellets. When an oxide-based one and rare-earth-based one are blended and sintered, the rare earth is oxidized so that the magnetic properties cannot be obtained. When the sintering is performed in a reducing atmosphere, the result is that the oxide-based ferrite is reduced and the rare-earth-based one is oxidized leading to a further decreased magnetic energy. Further, when pellets of an oxide-based plastic magnet and pellets of a rare-earth-based plastic magnet are blended and subjected to injection molding, it is known that, since the molding is performed at a high temperature and in an oxidizing atmosphere, the rare-earth-based magnetic powder is oxidized so that the magnetic energy is greatly decreased.

## Disclosure of the Invention

In the present invention, an oxide-based and a rare-earth-based magnetic powders are each separately subjected to a surface treatment with a coupling agent and the like and the oxide-based one and the rare-earth-based one are each separately kneaded with admixture of a plasticizer together with nylon and the like separately to give oxide-based pellets and rare-earth-based pellets. In conducting injection molding, further, these pellets are blended in a proportion in accordance with the desired magnetic properties and molded so that specified magnetic properties can be obtained without reduction of the oxide-based one and without oxidation of the rare-earth-based one.

## Brief Description of the Drawing

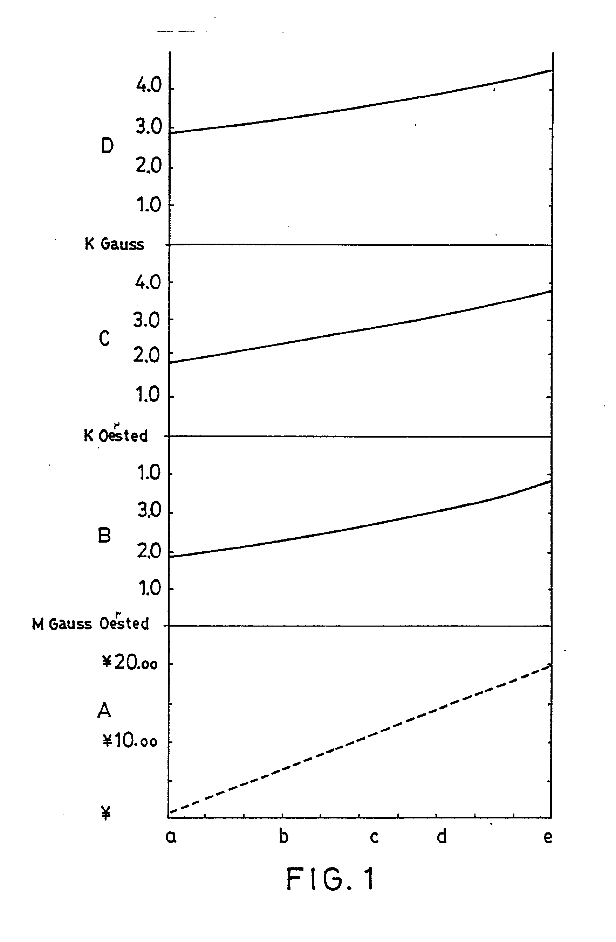

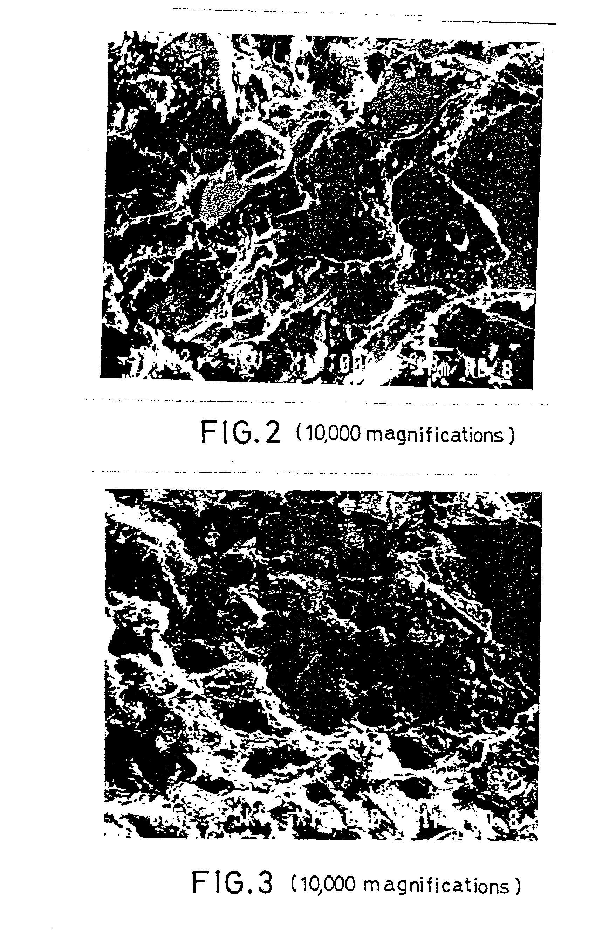

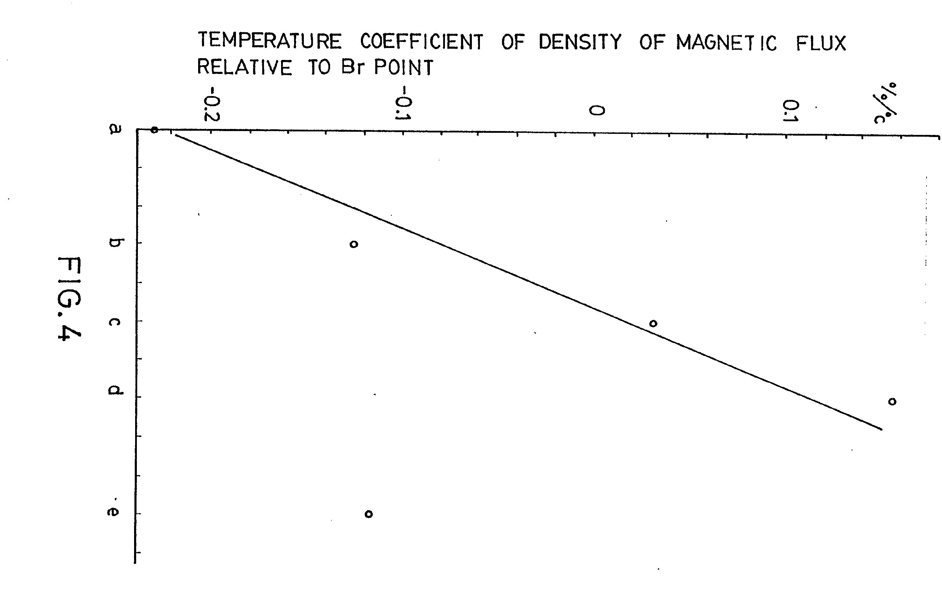

Figure 1 shows the Br, bHc, BHmax and costs when the pellets of a rare-earth-based plastic magnet and the pellets of an oxide-based plastic magnet are blended in varied proportions and molded according to the present invention. Figure 2 shows the surface-treated condition of a magnetic powder of a conventional product (an electron microscopic photograph illustrating the crystalline textural structure on a broken surface of a conventional plastic magnet). Figure 3 shows the surface-treated condition of a magnetic powder according to the present invention (an electron microscopic photograph illustrating the crystalline textural structure on a broken surface of a plastic magnet according to the present invention). Figure 4 shows the temperature coefficient of the density of magnetic flux at the point Br when a Sr ferrite and pellets of Nd-Fe-B plastic magnets are blended in varied proportions and molded according to the present invention.

A - costs (unit: yen); B - BHmax (unit: megagauss.oersted MGOe); C - bHc (unit: oersted Oe); D - Br (unit: gauss G); a, b, c, d and e - blending ratio in molding of pellets of an oxide-based plastic magnet and pellets of a rare-earth-based plastic magnet, a - 100% of the oxide-based one; b - 70% of the oxide-based one and 30% of the rare-earth-based one; c - 50% of the oxide-based one and 50% of the rare-earth-based one; d - 30% of the oxide-based one and 70% of the rare-earth-based one; and e - 100% of the rare-earth-based one, at the respective positions.

## Best Mode to Practice the Invention

In order to describe the present invention in more detail, a description is given thereof with reference to the accompanying drawing.

Figure 1 is for illustration of the Br (density of residual magnetic flux), bHc (coersive force), BHmax (maximum energy product) and costs for the respective proportions of blending and molding of the pellets of a rare-earth-based (Nd-Fe-B) plastic magnet and pellets of an oxide-based (Sr ferrite) plastic magnet according to the present invention. Namely, the plastic magnet with admixture of 92% by weight of the Sr ferrite exhibits at least 1.75 MGOe of BHmax and the plastic magnet with admixture of 90% by weight of the Nd-Fe-B exhibits 4.2 MGOe of BHmax. The characteristic properties and the costs are shown when they are blended and molded in varied proportions. While the plastic magnet with admixture of 92% by weight of the Sr ferrite has characteristics including 2700 G of Br, 2100 Oe of bHc, 1.75 MGOe of BHmax and 1.00 yen per g of the costs, a magnet obtained by blending 70% of the pellets of this Sr ferrite plastic and 30% of the pellets of the Nd-Fe-B plastic has characteristics including 2900 G of Br, 2200 Oe of bHc, 2.0 MGOe of BHmax and 6.30 yen per g of the costs. Further, the characteristics when 30% of the Sr ferrite pellets and 70% of the Nd-Fe-B plastic pellets are blended include 3600 G of Br, 2800 Oe of bHc, 2.75 MGOe of BHmax and 14.30 yen per g of the costs. It is assumed here that the 90% by weight plastic pellets of Nd-Fe-B are 20.00 yen. And, the characteristics of the 90% by weight Nd-Fe-B plastic magnet include 4400 G of Br,

3800 Oe of bHc and 4.2 MGOe of BHmax.

The plastic material as the matrix of the plastic magnet according to the present invention can also be nylon (6, 66, 11, 12 and the like), PPS, PP, PE and the like and the magnetic powders may be admixed with the same matrix material and blended and molded or each of the magnetic powders may be admixed with a different matrix material and blended and molded absolutely without influences on the performance.

Further, Figure 2 is a crystalline textural structure illustrating the surface-treated condition of the conventional magnetic powder. Figure 3 is a crystalline textural structure illustrating the surface-treated condition of a magnetic powder according to the present invention. It is understood from these photographs that the resin well entangles the surface of the magnetic particles by the effect of the silane coupling treatment of the magnetic powder of the inventive product. From this fact, blending of the rare-earth magnetic powder and the oxide magnetic powder does not result in oxidation or reduction of each by the other consequently without decrease in the magnetic properties. As is illustrated in the electron microscopic photograph of the broken surface in Figure 3, furthermore, breaking takes place on the resin surface so that the breaking point load is high and, in contrast to the breaking point load of 4.2 to 7.3 kgf in the 92% by weight compounding of the conventional magnetic powder, the breaking point load in the inventive product with the 92% by weight compounding of the same magnetic powder is 19.6 to 20.3 kgf showing a great improvement in the mechanical strength.

As a prominent feature of the present invention, furthermore, it was noted that the temperature coefficient of the BH curve as the magnetic property is subject to changes depending on the compounding proportion of the pellets of the Sr ferrite magnet and the pellets of the Nd-Fe-B magnet. Figure 4 shows the temperature coefficient of the Br point as a magnetic property (BH curve) obtained by blending of pellets by mixing 91.5% by weight of a Sr ferrite magnetic powder and the balance of 12-nylon and the pellets by mixing 90% by weight of a Nd-Fe-B magnetic powder and the balance of 12-nylon followed by anisotropic molding. When molded with 100% of the pellets of the Sr ferrite magnet, the temperature coefficient of the Br point is negative against temperature increase to be -0.23%/°C and, when molded by blending 70% of the pellets of the Sr ferrite and 30% of the pellets of the Nd-Fe-B magnet, the absolute value of the temperature coefficient of the Br point decreases to be -0.133%/°C. When molded with 50% of the pellets of the Sr ferrite and 50% of the pellets of the Nd-Fe-B magnet, furthermore, it is converted from negative to positive to be +0.031%/°C. When molded with 30% of the pellets of the Sr ferrite and 70% of the pellets of the Nd-Fe-B magnet, it has been discovered that the positive temperature coefficient is still increased to be +0.055%/°C. While a problem in the Nd-Fe-B plastic magnet is the high susceptibility to rusting, rust is never formed by virtue of the surface treatment of the magnetic particles by the above described method and the strong bonding force of 12-nylon. In the next place, an example is shown in Table 1 for the temperature coefficient depending on the blending ratio of the pellets of the Sr ferrite magnetic powder and the pellets of the Nd-Fe-B magnetic powder.

## Industrial Utilizability

By undertaking the above described method, a high-energy magnetic property not found in conventional ferrite plastic magnets can be obtained by mixing an oxide-based Ba or Sr ferrite magnet and a rare-earth-based Sm-Co or Nd-Fe-B magnet and the like susceptible to oxidation and the magnetic energy can be controlled by means of the compounding ratio of the oxide-based magnet and the rare-earth-based magnet. This possibility is obtained by binding up an oxide-based magnetic powder and a rare-earth-based magnetic powder separately with a plastic matrix after a coupling treatment such as a silane coupling and the like and then belnding and molding them together. Moreover, a high-energy plastic magnet can be manufactured still at relatively low costs.

As is described above, furthermore, a remarkable effect could be obtained that, by mixing an oxide-based ferrite magnet and a rare-earth-based magnet, the absolute value of the negative magnetism-temperature coefficient of the ferrite magnet was decreased to zero by the compensation of the respective magnetism-temperature coefficients for each other and further converted to a positive magnetism-temperature coefficient by increasing the compounding proportion of the rare-earth-based magnet. In particular, a plastic magnet having useful characteristics suitable for applications in a wide field can be obtained with the magnetism-temperature coefficient equal to zero in a temperature range up to 130 °C when the mixing ratio of the oxide-based ferrite magnet and the rare-earth-based magnet is 50%:50%.

In addition, a possible means can be obtained for temperature compensation in motors, power generators and the like since a positive temperature coefficient can be exhibited against temperature increase.

Besides, the mechanical strength as a plastic magnet is high absolutely without the danger of breaking so that shafts and the like can be forcibly thrusted.

| Compounding proportion of magnetic powder pellets | Temperature range | Temperature coefficient %/°C | |
|---|---|---|---|
| | | Br point | BHmax point |
| Sr ferrite 100% | 24 - 104 °C | -0.188 | -0.182 |
| Sr ferrite 70% Nd-Fe-B 30% | 25 - 135 °C | -0.131 | -0.128 |
| Sr ferrite 50% Nd-Fe-B 50% | 17 - 55 °C 55 - 105 °C | +0.099 -0.049 | +0.178 -0.043 |
| Sr ferrite 30% Nd-Fe-B 70% | 23 - 53 °C 53 - 115 °C | +0.169 -0.026 | +0.185 -0.050 |

Table 1

C L A I M

1.  A plastic-bonded magnet characterized in that, in a plastic magnet, pellets of a ferrite magnet by blending an oxide-based magnetic powder (Ba ferrite or Sr ferrite), after a surface treatment with a coupling agent, and 12-nylon and the like together with a plasticizer and the like and pellets of a rare-earth plastic magnet by blending a magnetic powder of the Sm-Co type ($Sm_1Co_5$, $Sm_2Co_{17}$), Nd-Fe-B type (quenched type, sintered type) and the like, after a surface treatment with a coupling agent, and 12-nylon and the like together with a plasticizer and the like are mixed together in a desired proportion and subjected to magnetically isotropic molding or magnetically anisotropic molding so as to give a possibility of obtaining magnetic properties intermediate between the magnetic properties of the ferrite magnet and the magnetic properties of the rare-earth magnet and further to give a magnetism-temperature coefficient not exceeding 1/2 of that in the ferrite.

2.  The plastic-bonded magnet described in Article 1 of the CLAIM characterized in that, as being prepared according to the method described in Article 1 of the CLAIM, the mechanical strength is greatly increased to show a breaking point load as large as two to four times.

3.  The plastic-bonded magnet described in Article 1 of the CLAIM characterized in that, according to the method described in Article 1 of the CLAIM, by increasing the compounding proportion of the pellets of the rare-earth-based plastic magnet (Nd-Fe-B) relative to the treatment-worked pellets of the oxide plastic magnet (Sr ferrite), the magnetic properties exhibit a temperature coefficient reaching zero from the negative temperature coefficient against temperature increase inherent in the Sr ferrite with an increase in the pellets of the Nd-Fe-B plastic magnet, being converted into a positive temperature coefficient against temperature increase with a further increase in the pellets of the Nd-Fe-B plastic magnet, the positive temperature coefficient being increased with a still further increase in the pellets of the Nd-Fe-B plastic magnet and that this fact is utilized to give a possibility of temperature compensation of the electric current in view of the negative temperature coefficient of the electric current passing through copper, aluminum and the like having a positive temperature coefficient of resistance so as to realize a motor having stability of torque, velocity of revolution and the like against variation of temperature and to provide a power generator similarly having stability in the output characteristics against temperature.

FIG. 1

FIG.2 (10,000 magnifications)

FIG.3 (10,000 magnifications)

EP 0 381 772 A1

FIG. 4

**I. CLASSIFICATION OF SUBJECT MATTER** (if several classification symbols apply, indicate all) [6]

According to International Patent Classification (IPC) or to both National Classification and IPC

Int. Cl$^4$    H01F1/02, H02K21/06

**II. FIELDS SEARCHED**

| Minimum Documentation Searched [7] | |
|---|---|
| Classification System | Classification Symbols |
| IPC | H01F1/02, H02K21/06 |

Documentation Searched other than Minimum Documentation
to the Extent that such Documents are Included in the Fields Searched [8]

| | |
|---|---|
| Jitsuyo Shinan Koho | 1926 - 1989 |
| Kokai Jitsuyo Shinan Koho | 1971 - 1989 |

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| Y | JP, A, 62-257703 (Seiko Epson Corp.) 10 November 1987 (10. 11. 87) (Family: none) | 1, 2 |
| Y | JP, A, 60-223095 (Hitachi Metals, Ltd.) 7 November 1985 (07. 11. 85) (Family: none) | 1, 2 |
| A | JP, A, 63-62842 (TDK Corporation) 19 March 1988 (19. 03. 88) Page 4, lower left column, line 17 to lower right column, line 13 (Family: none) | 3 |

* Special categories of cited documents: [10]

"A"  document defining the general state of the art which is not considered to be of particular relevance

"E"  earlier document but published on or after the international filing date

"L"  document which may throw doubts on priority claim(s) or which is cited to establish the publication date of another citation or other special reason (as specified)

"O"  document referring to an oral disclosure, use, exhibition or other means

"P"  document published prior to the international filing date but later than the priority date claimed

"T"  later document published after the international filing date or priority date and not in conflict with the application but cited to understand the principle or theory underlying the invention

"X"  document of particular relevance; the claimed invention cannot be considered novel or cannot be considered to involve an inventive step

"Y"  document of particular relevance; the claimed invention cannot be considered to involve an inventive step when the document is combined with one or more other such documents, such combination being obvious to a person skilled in the art

"&"  document member of the same patent family

**IV. CERTIFICATION**

| Date of the Actual Completion of the International Search | Date of Mailing of this International Search Report |
|---|---|
| September 5, 1989 (05. 09. 89) | September 18, 1989 (18. 09. 89) |
| International Searching Authority | Signature of Authorized Officer |
| Japanese Patent Office | |

Form PCT/ISA/210 (second sheet) (January 1985)